# DEMANDE DE BREVET EUROPEEN

(11) **EP 0 736 747 A1**
(43) Date de publication de la demande: **09.10.1996**
(21) Numéro de dépôt: 96400720.7
(22) Date de dépôt: 03.04.1996
(51) Int. Cl.: G01B 11/10

(54) **Procédé de détection de la variation du diamètre d'une fibre optique et procédé de fabrication de fibre optique**

(30) Priorité: 05.04.1995 FR 9504027
(71) Demandeur: ALCATEL FIBRES OPTIQUES, F-95871 Bezons Cedex (FR)
(72) Inventeur: Auge, Jacques, 91530 Saint Cheron (FR); Mercereau, Olivier, 91370 Verrières le Buisson (FR); Brehm, Claude, 92120 Montrouge (FR); Gagnaire, Henri, c/o Laboratoire TSI, Université, 42023 St. Etienne (FR)
(74) Mandataire: Schaub, Bernard

(57) **Abrégé**

L'invention fournit un procédé de détection d'une variation d'un diamètre d'une fibre optique (1), comprenant les étapes de:
- illumination transversale d'une portion de la fibre (1) par un faisceau lumineux incident (F),
- mesure d'un diagramme de rayonnement produit par la portion de fibre (1) dans un secteur angulaire aigu prédéterminé autour de la fibre, et
- détection de la variation du diamètre de ladite fibre optique en résultat d'une modification du diagramme de rayonnement angulaire produit.

Selon l'invention, le secteur angulaire est sensiblement défini ou bien par les deux angles 90° et 105°, ou bien par les deux angles 255° et 270°.

## Description

La présente invention concerne un procédé de détection de la variation du diamètre d'un corps optique allongé sensiblement cylindrique, tel que fibre optique. L'invention prévoit également un procédé de fabrication de fibre optique utilisant un tel procédé de détection. Le procédé de fabrication offre une garantie de régularité du diamètre de la fibre optique avec une grande précision.

La technique antérieure divulgue deux procédés de détection de la variation du diamètre d'une fibre optique.

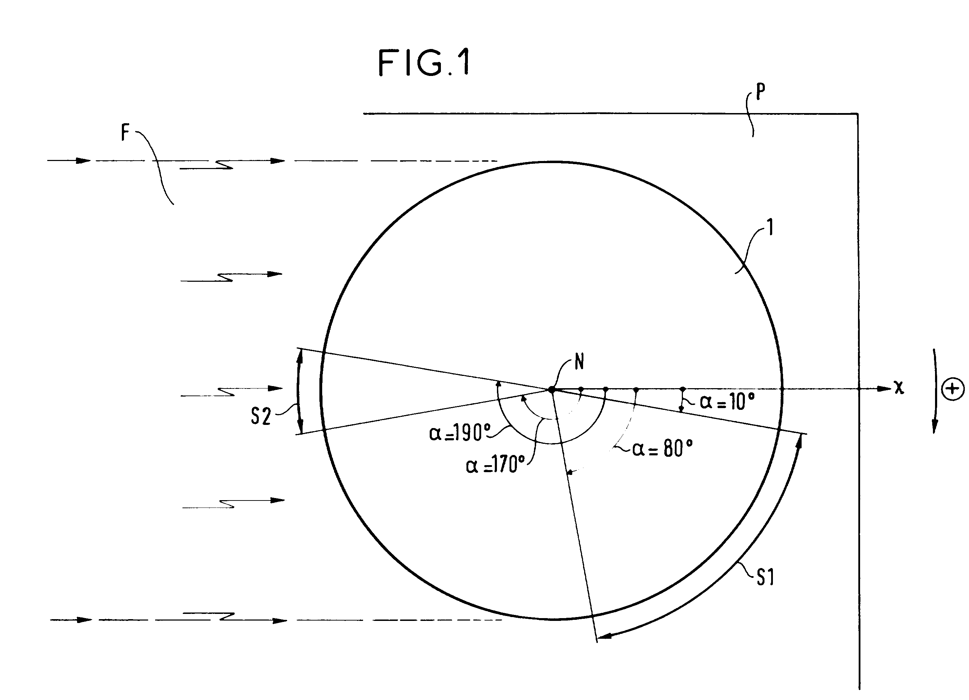

En référence à la figure 1, ces deux procédés prévoient d'illuminer une portion d'une fibre optique 1, que l'on suppose, à des fins d'explication, portée par un axe normal N à un plan de référence P. Le faisceau lumineux incident d'illumination F est porté par un axe x appartenant au plan de référence P, et se projette normalement sur la fibre 1. Cet axe x est orienté suivant le sens de propagation du faisceau lumineux. La fibre optique 1 est en déplacement relatif, suivant l'axe normal N, par rapport au faisceau lumineux F. En résultat de phénomènes optiques de propagation/réflexion de la lumière dans/sur la fibre, un diagramme de rayonnement particulier est produit autour de la fibre 1. Les deux procédés de la technique antérieure prévoit d'analyser ce diagramme de rayonnement dans un secteur angulaire limité autour de la fibre, à partir d'une mesure de niveaux d'intensité lumineuse diffusée par la portion de fibre optique 1, en des points respectifs du plan de référence qui sont délimités par ledit secteur angulaire limité défini autour de l'axe normal N. Ce secteur angulaire est défini par deux angles qui possèdent un sommet formé par l'intersection entre l'axe normal et le plan de référence, et qui sont orientés dans un sens trigonométrique donné, choisi arbitrairement négatif, par rapport à l'axe orienté x.

Le premier procédé de la technique antérieure, introduit dans l'article de J. Danière et al. intitulé " Un nouvel appareillage pour enregistrer les fluctuations de diamètre d'une fibre optique", publié dans "J. Phys. Sci. Intrum., vol. 18, année 1985", délimite le secteur angulaire aigu d'obtention du diagramme de rayonnement par les deux angles 10° et 80°. Ce secteur angulaire est désigné par S1 dans la figure 1. En pratique, la mesure des niveaux de luminosité en des points respectifs du secteur est basée par exemple sur l'utilisation d'une barrette de diodes, type CCD. Le diagramme de rayonnement obtenu dans ce secteur angulaire se présente sous la forme d'un ensemble de franges lumineuses résultant des interférences entre, d'une part, des ondes du faisceau incident F qui sont réfléchies sur la surface extérieure de la fibre 1 recevant ledit faisceau et, d'autre part, des ondes réfractées sur la surface intérieure de la fibre située du côté opposé audit faisceau. La propriété remarquable d'un tel diagramme de rayonnement est qu'il varie en fonction du diamètre de la fibre. Plus précisément, le diagramme subit une translation angulaire en résultat d'une variation du diamètre de la fibre. Il est donc ainsi possible de détecter une variation du diamètre de la fibre optique en résultat d'une détection d'une modification du diagramme de rayonnement angulaire. Une telle détection de modification du diagramme de rayonnement peut être mise en oeuvre relativement à un diagramme de rayonnement de référence mémorisé qui est obtenu avec une fibre optique ayant un diamètre de référence.

Le second procédé de la technique antérieure est mis en oeuvre d'une manière identique à ce qui vient d'être décrit en ce qui concerne le premier procédé, à la différence près que l'on délimite le secteur angulaire d'obtention du diagramme de rayonnement par les deux angles 170° et 190°, comme cela est représenté par la référence S2 dans la figure 1. Ce procédé se distingue du premier procédé décrit en ce que les phénomènes optiques à l'origine de l'effet obtenu sont non pas des phénomènes d'interférence mais des phénomènes de rétrodiffusion. L'effet obtenu est de type identique à celui décrit précédemment en ce que dans le secteur angulaire aigu 170°-190°, le diagramme de rayonnement résultant subit une translation angulaire d'ensemble en résultat d'une variation du diamètre de la fibre optique.

Les progrès récents dans le domaine du fibrage ont pour conséquence que les défauts à détecter sur une fibre optique sont de l'ordre de 50 nm. Les deux procédés précités de la technique antérieure présentent alors l'inconvénient d'avoir une sensibilité trop faible. A titre d'exemple, dans le cadre du premier procédé décrit, la translation d'ensemble du diagramme de rayonnement dans le secteur angulaire 10°-70° présente une périodicité de 0,45 µm, ce qui signifie que le diagramme de rayonnement dans le secteur angulaire 10°-70° se reproduit sensiblement à l'identique pour des diamètres de la fibre égaux entre eux à une différence près égale à un multiple d'un pas élémentaire de 0,45 µm. Ainsi, le diagramme de rayonnement est translaté à une vitesse relativement faible en fonction du diamètre de la fibre. Les limites des appareils de détection et mesure optiques ne permettent alors de détecter qu'une variation de l'ordre de 110 nm du diamètre de la fibre.

Un premier objectif de l'invention est de remédier à l'inconvénient précité en fournissant un procédé de détection de la variation du diamètre d'une fibre optique ayant une sensibilité très élevée comparativement à la technique antérieure.

Un second objectif de l'invention est de fournir un procédé de fabrication de fibre optique utilisant un tel procédé de détection.

A cette fin, un procédé de détection d'une variation d'un diamètre d'un corps optique allongé sensiblement cylindrique dont au moins une portion est portée par un axe normal à un plan de référence, comprenant les étapes de
- illumination de la portion du corps optique par un faisceau lumineux incident qui est porté par un axe appartenant au plan de référence et orienté suivant le sens de propagation du faisceau lumineux, le corps optique étant en déplacement relatif par rapport au faisceau lumineux,
- mesure de niveaux d'intensité lumineuse diffusée par la portion du corps en des points respectifs du plan de référence délimités par un secteur angulaire aigu prédéterminé autour de l'axe normal, en vue de produire un diagramme de rayonnement angulaire, le secteur angulaire étant défini par deux angles qui possèdent un sommet formé par l'intersection entre l'axe normal et le plan de référence, et
- détection de la variation du diamètre du corps optique allongé en résultat d'une modification du diagramme de rayonnement angulaire produit,
est caractérisé en ce que le secteur angulaire est sensiblement défini par les deux angles 90° et 105° définis par rapport audit axe orienté dans le sens trigonométrique négatif.

Selon une autre variante de l'invention, le secteur angulaire est sensiblement défini par les deux angles 255° et 270°.

Typiquement, la modification du diagramme de rayonnement est une translation angulaire, dans le secteur angulaire, d'un niveau maximal d'intensité lumineuse diffusée par la portion du corps allongé.

Avantageusement, la détection de la variation du diamètre dudit corps optique allongé résulte d'une comparaison de deux diagrammes de rayonnement successivement produits.

Un dispositif selon l'invention pour la mise en oeuvre du procédé comprend
- une source lumineuse pour produire un faisceau lumineux incident,
- un moyen d'analyse lumineuse apte à produire un diagramme de rayonnement, et dont une surface de réception couvre tout ou partie du secteur angulaire, et
- un moyen de traitement pour détecter une modification du diagramme de rayonnement angulaire.

Le moyen de traitement comprend un moyen pour comparer deux diagrammes de rayonnement successivement produits.

Le procédé selon l'invention de fabrication d'une fibre optique, comprend les étapes de:
- chauffage d'une préforme,
- extraction de la fibre optique par traction de matière de la préforme chauffée, la fibre étant portée par un axe normal à un plan de référence,
- illumination d'une portion de ladite fibre optique par un faisceau lumineux incident qui est porté par un axe appartenant audit plan de référence, et orienté suivant le sens de propagation du faisceau lumineux,
- mesure de niveaux d'intensité lumineuse diffusée par la fibre optique en des points respectifs du plan de référence délimités par un secteur angulaire aigu prédéterminé autour dudit axe normal, en vue de produire un diagramme de rayonnement angulaire, ledit secteur angulaire étant délimité par deux angles qui possèdent un sommet formé par l'intersection entre l'axe normal et le plan de référence,
- détection d'une variation du diamètre de la fibre optique en résultat d'une modification dudit diagramme de rayonnement angulaire, et
- action en contre-réaction sur la vitesse de déroulement de la fibre, de sorte à asservir ledit diagramme de rayonnement angulaire à un diagramme de rayonnement de référence.

Il est caractérisé en ce que le secteur angulaire est sensiblement défini par les deux angles 90° et 105° définis par rapport audit axe orienté dans le sens trigonométrique négatif.

Selon une variante de ce procédé de fabrication, le secteur angulaire est sensiblement défini par les deux angles 255° et 270°.

D'autres caractéristiques et avantages de la présente invention apparaîtront plus clairement à la lecture de la description suivante, en référence aux dessins annexés correspondants, dans lesquels :
- la figure 1, déjà commentée, montre une coupe en section transversale d'une fibre optique illuminée latéralement par un faisceau optique, et représente deux secteurs angulaires retenus selon la technique antérieure pour l'obtention d'un diagramme de rayonnement angulaire utile à la détection de la variation du diamètre de la fibre;
- la figure 2 est un bloc-diagramme schématique d'un dispositif de détection de la variation du diamètre d'une fibre optique pour la mise en oeuvre du procédé selon l'invention;
- la figure 3 montre une pluralité de diagrammes cartésiens illustrant la translation angulaire du diagramme de rayonnement en fonction du diamètre d'une fibre optique, dans le cadre de l'invention; et
- la figure 4 montre un système de fabrication de fibre optique mettant à profit le procédé de détection de la variation du diamètre d'une fibre optique selon l'invention.

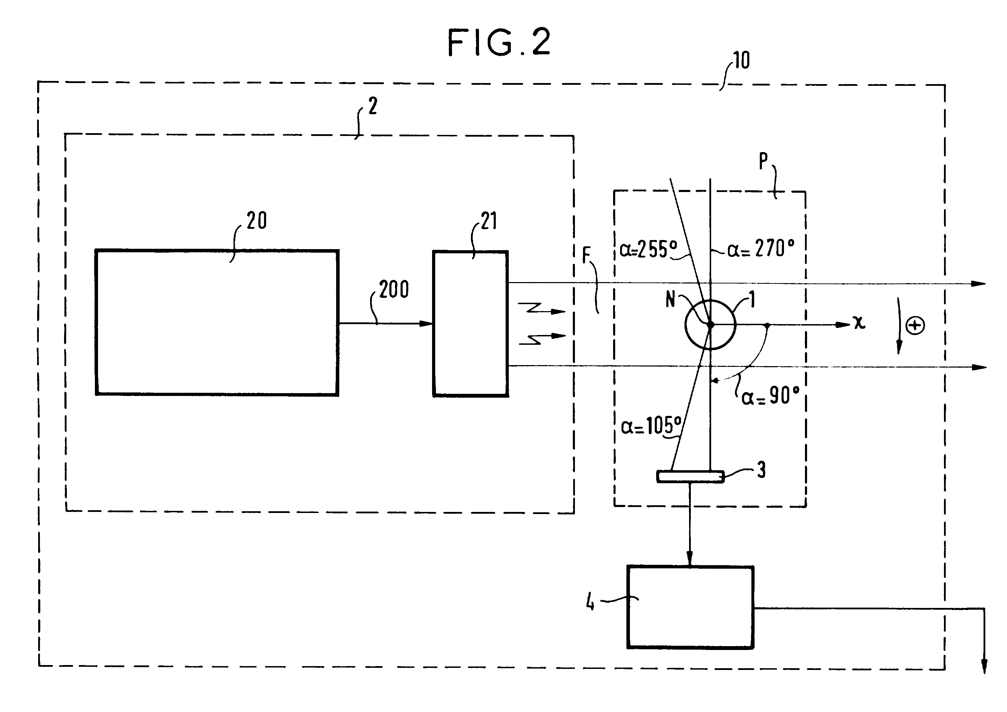

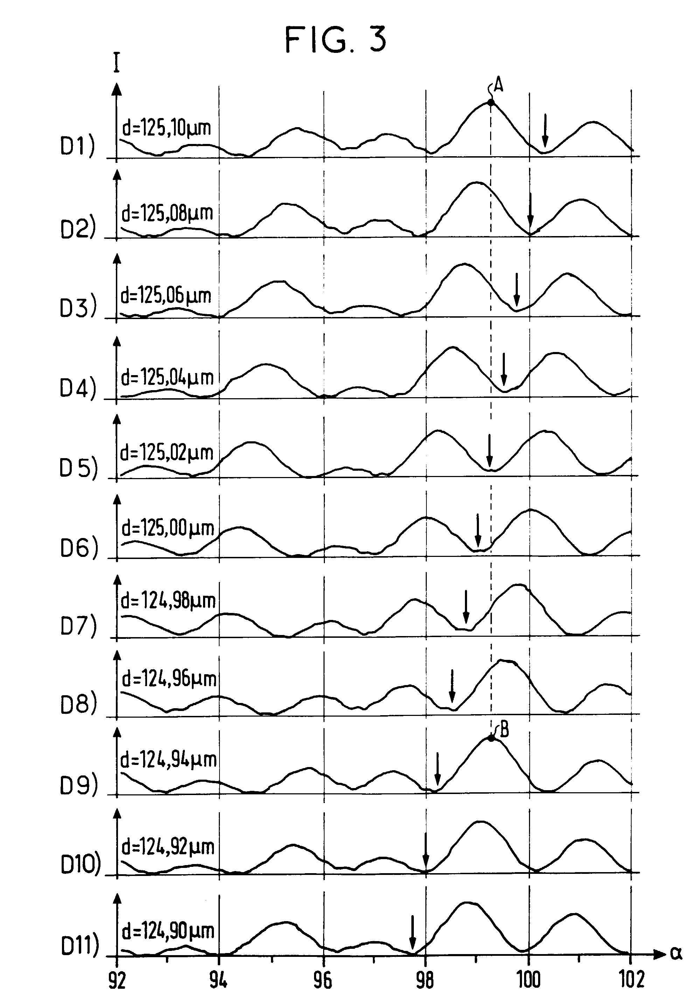

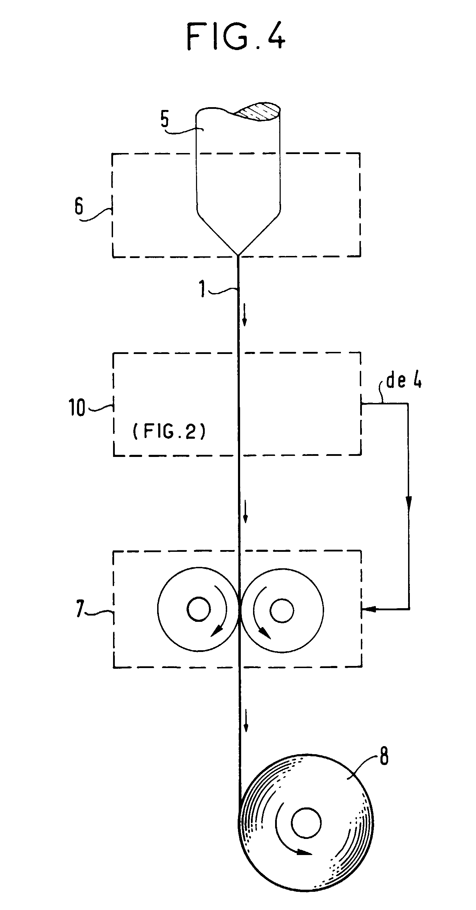

En référence à la figure 2, un dispositif de détection de la variation du diamètre d'une fibre optique 10 selon l'invention comprend une source lumineuse 2, un organe d'analyse lumineuse 3 et un organe de traitement 4. La source lumineuse 2 comprend, à titre d'exemple, en cascade un laser Hélium-Néon 20 et un expanseur de faisceau lumineux 21. Le laser produit un faisceau lumineux concentré 200 qui est expansé par l'expanseur 21 en un faisceau lumineux incident F qui illumine une portion de la fibre optique 1. Cette portion de fibre optique 1 est portée par un axe normal N à un plan de référence, noté P, et défile le long de cet axe. Le faisceau lumineux incident F, porté par un axe x appartenant au plan de référence P, se projette normalement sur la portion de fibre. A des fins de repérage angulaire, cet axe x est orienté suivant le sens de propagation du faisceau F. L'organe d'analyse lumineuse, typiquement sous la forme d'une barrette de diodes CCD, est positionné de sorte à recevoir les ondes lumineuses diffusées par la fibre dans un secteur angulaire aigu sensiblement délimité par les angles 90° et 105°, ces angles étant définis par rapport audit axe orienté dans le sens trigonométrique négatif. Un tel organe d'analyse 3, dont la surface de réception couvre tout ou partie du secteur angulaire 90°-105°, est sensible aux ondes lumineuses diffusées par la fibre optique 1 dans le secteur angulaire ainsi défini, pour produire un diagramme de rayonnement correspondant à ce secteur. L'organe d'analyse 3 agit donc comme un organe de mesure périodique de niveaux d'intensité lumineuse diffusée par la portion de fibre optique illuminée, en des points respectifs de la surface sensible de l'organe dans le secteur angulaire défini par les deux angles 90° et 105°. Une sortie de l'organe d'analyse lumineuse 3 est appliquée à une entrée de l'organe de traitement 4. Cet organe de traitement 4 reçoit lesdits niveaux d'intensité lumineuse en les points respectifs de la surface sensible de l'organe 3. L'organe de traitement 4 effectue des traitements, typiquement numériques, sur ces niveaux d'intensité lumineuse, périodiquement mis à jour par rafraîchissement, à des fins de détection de la variation du diamètre de la fibre optique 1. Cette détection de la variation du diamètre de la fibre optique est basée sur une modification du diagramme de rayonnement. Deux ou plusieurs diagrammes de rayonnement successivement produits par l'organe d'analyse 3 sont comparés dans l'organe de traitement 4 pour détecter une modification de l'un par rapport à l'autre de ces diagrammes successifs.

La figure 3 montre N=11 diagrammes de rayonnement D1 à D11 respectivement obtenus pour N=11 portions de fibre optique distinctes ayant des diamètres respectifs d décroissant par pas de 0,02 µm = 20nm, à partir de 125,10 µm jusqu'à 124,90 µm. Chacun de ces diagrammes de rayonnement D1-D11 exprime l'intensité lumineuse I en fonction de l'angle α mesuré par rapport à l'axe x dans la figure 2, α variant de 92° à 102°. Il peut être observé une translation angulaire du diagramme de rayonnement en fonction du diamètre d de la fibre. Comme montré par le segment en trait discontinu reliant les points A et B, un diagramme de rayonnement se reproduit sensiblement identique à lui même pour une variation du diamètre de la fibre approximativement égale à (125,10 - 124,94) µm = 0,16 µm, soit 160 nm. Le diagramme de rayonnement présente donc une périodicité en dépendance d'une variation du diamètre de la fibre égale à 160 nm. En comparaison avec la technique antérieure, il peut être constaté que la vitesse de translation du diagramme de rayonnement en fonction du diamètre de la fibre est plus importante selon l'invention, ce qui offre une sensibilité de détection de la variation du diamètre de la fibre d'autant plus élevée. Avantageusement, est retenu comme critère de modification du diagramme de rayonnement à l'origine de la détection d'une variation du diamètre de la fibre, une translation angulaire, dans le secteur angulaire de l'invention, d'un niveau maximal d'intensité lumineuse diffusée par la fibre optique. A titre indicatif, ce niveau maximal d'intensité lumineuse est repéré dans le diagramme D1 de la figure 3, par le point A. Un tel choix résulte du fait qu'un niveau élevé est plus aisément et plus précisément détecté par le dispositif 3. En pratique, un seuil de détection d'une variation du diamètre de la fibre, dépendant en grande partie de la précision des dispositifs d'analyse 3 existant aujourd'hui, prend une valeur sensiblement égale à 20 nm, ce qui constitue une variation de diamètre très faible. Bien que dans la description qui précède, la réalisation se soit limitée à considérer le secteur angulaire 90° - 105° pour l'analyse du diagramme de rayonnement, l'invention prévoit aussi de retenir dans une seconde variante le secteur angulaire 255° - 270°, comme cela est représenté dans la figure 2. Une telle variante résulte du caractère symétrique des résultats de phénomènes optiques dans les deux secteurs angulaires 90° - 105° et 255° - 270°.

En résultat de tout ce qui précède, l'invention fournit un procédé de fabrication de fibre optique, maintenant décrit en référence à la figure 4. Typiquement, un système de fabrication de fibre optique comprend un dispositif de chauffage de préforme 6, un dispositif de traction de fibre optique 7, un dispositif d'enrobage (non représenté) de la fibre 1 et un dispositif de stockage de fibre optique 8. Une partie d'une préforme de verre 5 est chauffée par le dispositif de chauffage 6. Une fibre optique 1 est extraite par traction, par le dispositif 7, de matière de la préforme 5 ainsi chauffée. La fibre optique 1 ainsi formée défile à une vitesse donnée pour être stockée, par exemple par enroulement, dans le dispositif 8. L'invention propose de positionner sur le trajet de la fibre défilant, un dispositif selon l'invention 10 tel que décrit en référence à la figure 2. Ce dernier dispositif comprend des moyens identiques et agencés de la même manière que ceux divulgués dans l'une quelconque des deux variantes décrites en référence à cette figure 2. Le dispositif de traitement 4 (fig.2) est prévu pour détecter une variation dans le temps des diagrammes de rayonnement successivement obtenus, et il agit alors en contre-réaction sur la vitesse de déroulement de la fibre, de sorte à asservir le diagramme de rayonnement angulaire courant à un diagramme de rayonnement de référence correspondant au diagramme obtenu lors de l'activation du dispositif 4. Une telle contre-réaction vise à garantir que la fibre est formée avec un diamètre sensiblement constant, et cela avec une très grande précision. L'action sur la vitesse de déroulement de la fibre peut par exemple être obtenue par commande, par le dispositif 4, de la vitesse d'entrainement du dispositif de traction 7. Il est à noter que ce système de fabrication de fibre optique peut mettre en oeuvre en combinaison, d'une part, un procédé de détection de variation du diamètre de la fibre optique selon l'invention, caractérisé par un choix de secteur angulaire particulier d'analyse du diagramme de rayonnement, et, d'autre part, un procédé de détection conventionnel défini par un autre secteur angulaire connu. Dans ce cas, le procédé conventionnel est destiné à garantir une uniformité du diamètre de la fibre à des variations près relativement élevées dans une plage donnée, et le procédé selon l'invention opère à l'intérieur de cette plage pour offrir une régularité du diamètre de la fibre à des écarts de fluctuation près très faibles.

Le diamètre d'une fibre optique obtenue par la mise en oeuvre d'un tel procédé de fabrication présente une régularité particulièrement élevée.

## Revendications

1. Procédé de détection d'une variation d'un diamètre (d) d'un corps optique allongé (1) sensiblement cylindrique dont au moins une portion est portée par un axe normal (N) à un plan de référence (P), comprenant les étapes de
- illumination d'une portion dudit corps optique (1) par un faisceau lumineux incident (F) qui est porté par un axe (x) appartenant audit plan de référence (P) et orienté suivant le sens de propagation du faisceau lumineux (F), ledit corps optique (1) étant en déplacement relatif par rapport audit faisceau lumineux (F),
- mesure de niveaux d'intensité lumineuse diffusée par ladite portion du corps (1) en des points respectifs dudit plan de référence (P) délimités par un secteur angulaire aigu prédéterminé autour dudit axe normal (N), en vue de produire un diagramme de rayonnement angulaire (D1-D11), ledit secteur angulaire étant défini par deux angles qui possèdent un sommet formé par l'intersection entre ledit axe normal (N) et ledit plan de référence (P), et
- détection de la variation du diamètre dudit corps optique allongé (x) en résultat d'une modification du diagramme de rayonnement angulaire produit (D1-D11),
caractérisé en ce que ledit secteur angulaire est sensiblement défini par les deux angles 90° et 105° définis par rapport audit axe orienté (x) dans le sens trigonométrique négatif.

2. Procédé de détection d'une variation d'un diamètre d'un corps optique allongé sensiblement cylindrique dont au moins une portion est portée par un axe normal (N) à un plan de référence (P), comprenant les étapes de
- illumination latérale d'une portion dudit corps optique (1) par un faisceau lumineux incident (F) qui est porté par un axe (x) appartenant audit plan de référence (P) et orienté suivant le sens de propagation du faisceau lumineux (F), ledit corps optique (1) étant en déplacement relatif par rapport audit faisceau lumineux (F),
- mesure de niveaux d'intensité lumineuse diffusée par ladite portion du corps (1) en des points respectifs dudit plan de référence (P) délimités par un secteur angulaire aigu prédéterminé autour dudit axe normal (N), en vue de produire un diagramme de rayonnement angulaire (D1-D11), ledit secteur angulaire étant défini par deux angles qui possèdent un sommet formé par l'intersection entre ledit axe normal (N) et ledit plan de référence (P), et
- détection de la variation du diamètre dudit corps optique allongé (1) en résultat d'une modification dudit diagramme de rayonnement angulaire (D1-D11),
caractérisé en ce que ledit secteur angulaire est sensiblement défini par les deux angles 255° et 270° définis par rapport audit axe orienté (x) dans le sens trigonométrique négatif.

3. Procédé conforme à la revendication 1 ou 2, caractérisé en ce que ladite modification du diagramme de rayonnement est une translation angulaire, dans ledit secteur angulaire, d'un niveau maximal d'intensité lumineuse diffusée par ladite portion du corps allongé (1).

4. Procédé conforme à la revendication 3, caractérisé en ce que ladite détection de la variation du diamètre dudit corps optique allongé (1) résulte d'une comparaison de deux diagrammes de rayonnement successivement produits.

5. Dispositif pour la mise en oeuvre du procédé conforme à l'une quelconque des revendications 1 à 3, caractérisé en ce qu'il comprend
- une source lumineuse (2) pour produire ledit faisceau lumineux incident (F),
- un moyen d'analyse lumineuse (3) apte à produire ledit diagramme de rayonnement, et dont une surface de réception couvre tout ou partie dudit secteur angulaire,
- un moyen de traitement (4) pour détecter une modification dudit diagramme de rayonnement angulaire.

6. Dispositif conforme à la revendication 5 pour la mise en oeuvre du procédé conforme à la revendication 4, caractérisé en ce que ledit moyen de traitement (4) comprend un moyen pour comparer deux diagrammes de rayonnement successivement produits.

7. Procédé de fabrication d'une fibre optique, comprenant les étapes de:
- chauffage (6) d'une préforme (5),
- extraction de ladite fibre optique (1) par traction (7) de matière de la préforme chauffée, ladite fibre (1) étant portée par un axe normal (N) à un plan de référence (P),
- illumination d'une portion de ladite fibre optique (1) par un faisceau lumineux incident (F) qui est porté par un axe (x) appartenant audit plan de référence (P), et orienté suivant le sens de propagation du faisceau lumineux (F),
- mesure de niveaux d'intensité lumineuse diffusée par ladite fibre optique (1) en des points respectifs dudit plan de référence (P) délimités par un secteur angulaire aigu prédéterminé autour dudit axe normal (N), en vue de produire un diagramme de rayonnement angulaire (D1-D11), ledit secteur angulaire étant délimité par deux angles qui possèdent un sommet formé par l'intersection entre ledit axe normal (N) et ledit plan de référence (P),
- détection d'une variation du diamètre (d) de ladite fibre optique (1) en résultat d'une modification dudit diagramme de rayonnement angulaire produit, et
- action en contre-réaction sur la vitesse de déroulement de la fibre, de sorte à asservir ledit diagramme de rayonnement angulaire produit à un diagramme de rayonnement de référence,
caractérisé en ce que ledit secteur angulaire est sensiblement défini par les deux angles 90° et 105° définis par rapport audit axe orienté dans le sens trigonométrique négatif.

8. Procédé de fabrication d'une fibre optique, comprenant les étapes de:
- chauffage (6) d'une préforme (5),
- extraction de ladite fibre optique (1) par traction (7) de matière de la préforme chauffée, ladite fibre (F) étant portée par un axe normal (N) à un plan de référence (P),
- illumination d'une portion de ladite fibre optique (1) par un faisceau lumineux incident (F) qui est porté par un axe (x) appartenant audit plan de référence (P) et orienté suivant le sens de propagation du faisceau lumineux (F),
- mesure de niveaux d'intensité lumineuse diffusée par ladite fibre optique (1) en des points respectifs dudit plan de référence (P) délimités par un secteur angulaire aigu prédéterminé autour dudit axe normal (N), en vue de produire un diagramme de rayonnement angulaire (D1-D11), ledit secteur angulaire étant délimité par deux angles qui possèdent un sommet formé par l'intersection entre ledit axe normal (N) et ledit plan de référence (P),
- détection d'une variation du diamètre de ladite fibre optique (1) en résultat d'une modification dudit diagramme de rayonnement angulaire (D1-D11), et
- action en contre-réaction sur la vitesse de déroulement de la fibre (1), de sorte à asservir ledit diagramme de rayonnement angulaire produit (D1-D11) à un diagramme de rayonnement de référence,
caractérisé en ce que ledit secteur angulaire est sensiblement défini par les deux angles 255° et 270° définis par rapport audit axe orienté dans le sens trigonométrique négatif.

9. Fibre optique (1) fabriquée selon l'un des procédés conforme à l'une quelconque des revendications 7 et 8.
